# EUROPEAN PATENT APPLICATION

(11) **EP 1 524 549 A1**
(43) Date of publication of application: **20.04.2005**
(21) Application number: 03388068.3
(22) Date of filing: 14.10.2003
(51) Int. Cl.: G02F 1/13

(54) **LCD display with an integrated shield box**

(71) Applicant: Sony Ericsson Mobile Communications AB, 221 88 Lund (SE)
(72) Inventor: Carlsson, Marcus, 112 26 Stockholm (SE); Nordenskjold, Kjell, 114 55 Stockholm (SE)
(74) Representative: Andersen, Poul Hoeg

(57) **Abstract**

An electronic equipment comprising a LCD display, a PCB and a shield box, wherein the LCD display and the shield box are joined into a single unit.

## Description

### Technical field

The invention relates to an electronic equipment comprising a LCD display, a printed circuit board (PCB) and a shield box, said shield box comprising a conductive cover sheet and conductive walls connected to the conductive cover sheet.

### Related prior art

Electronic equipment such as portable radio communication equipment contains a printed circuit board (PCB) on which the electronic components of the equipment are attached. These electronic components need to be protected from electromagnetic interference. For this purpose the PCB of such an electronic equipment is covered by an electromagnetic interference (EMI) shield that is electronically connected to the PCB often by being mounted on the surface of the PCB, or by spanning across the PCB and being connected to the outer rim thereof. Such an EMI shield is often referred to as a shield box. A shield box is constructed substantially as a sheet or plate with walls formed thereon, along the rims of the plate, and essentially perpendicular thereto. The plate and the walls are made of a conductive material such as a metal.

Furthermore such electronic equipment usually comprises a liquid crystal display (LCD display or simply LCD) for displaying information relevant to the user. The LCD display, the PCB and the shield box are contained in a cover consisting of a back cover part and a front cover part. The LCD display can be attached to the inside of an aperture formed in the front cover part, or it can be held in place at the aperture by abutment along the rim of the front side of the display to the rim of the aperture in the front cover part on the one side and by abutment of the back side of the display on the shield box.

### Object of the invention

LCD displays are fragile and susceptible to damage e.g. when the electronic equipment is dropped or exposed to unintended impacts on the equipment. Especially with larger LCD displays this can be a problem.

To protect the LCD display, the connection of the display to the cover of the electronic equipment is padded with a flexible gasket and/or pad e.g. in the form of a rubber gasket between the front cover and the rim of the LCD display, or by a rubber pad between the LCD display and the shield box.

Another obvious way of protecting the LCD display would be to increase its strength e.g. by constructing the metal back side of the display in a heavier materiel quality to increase its stiffness.

These solutions, however, would increase the size and weight of the electronic equipment.

It is an object of the present invention to provide a solution for increasing the strength of the LCD display for an electronic equipment without increasing the overall size and weight of the electronic equipment.

### Summary of the invention

The object of the invention is achieved by arranging the electronic equipment mentioned in the opening paragraph in such manner that the LCD display and the shield box are joined to form a single unit.

Thereby it is obtained that the rigidity, and thereby the strength of the LCD display is increased by the support it receives from the plate and/or the walls of the shield box. The invention, therefore, resides in the realization that the shield box can be used to increase the rigidity and therefore the strength of the LCD display.

In a first embodiment the LCD display is glued to the cover sheet of the shield box. This is the most simple embodiment, since it can be obtained using only known components, and possibly without costly processes and tools.

In a second embodiment the LCD display is soldered to the cover sheet of the shield box.

In a third embodiment the LCD display is taped to the cover sheet of the shield box by use of a double coated adhesive tape.

In the above mentioned embodiments the support of the plate part of a separate shield box is utilized. However, also the walls of the shield box can provide rigidity and strength to the LCD display. This realization is utilized by integrating the shield box and the LCD display, such that the shield box is an integrated part of the LCD display.

The further advantage of this arrangement is that this will decrease the thickness and weight of the electrical equipment, because the metal plate part of the shield box can be omitted.

In a preferred embodiment the cover sheet of the shield box is a metal plate provided on a back side of the LCD display, and the walls of the shield box are connected to said metal plate.

The walls may be formed metal, or they may be configured from a silicone material containing electrically conductive particles.

The electronic equipment of this invention will provide increased rigidity to the LCD display, which will protect the LCD display of the electronic equipment against unintended impacts. This can be obtained while maintaining or even decreasing the overall thickness and weight of the electronic equipment.

A further advantage is that the process of assembling the electronic equipment can be simplified when the shield box and the LCD display are joined prior to the assembly.

It should be emphasized that the term "comprises/comprising" when used in this specification is taken to specify the presence of stated features, integers, steps or components but does not preclude the presence or addition of one or more other features, integers, steps, components or groups thereof.

The term 'electronic equipment' includes portable radio communication equipment. The term 'portable radio communication equipment', which herein after is referred to as 'a mobile radio terminal', includes all equipment such as mobile telephones, pagers, communicators, i.e. electronic organizers, smartphones or the like.

### Description of the drawings

The invention will be described in detail in the following with reference to the drawings in which
Fig. 1 is a schematic diagram showing a cross section through of a prior art electronic equipment;
Fig. 2 is a schematic diagram showing a cross section through a LCD display, a shield box and a PCB of a first embodiment of the invention; and
Fig. 3 is a schematic diagram showing a cross section through a LCD display with a shield box and a PCB of another embodiment of the invention.

### Detailed description of embodiments of the invention

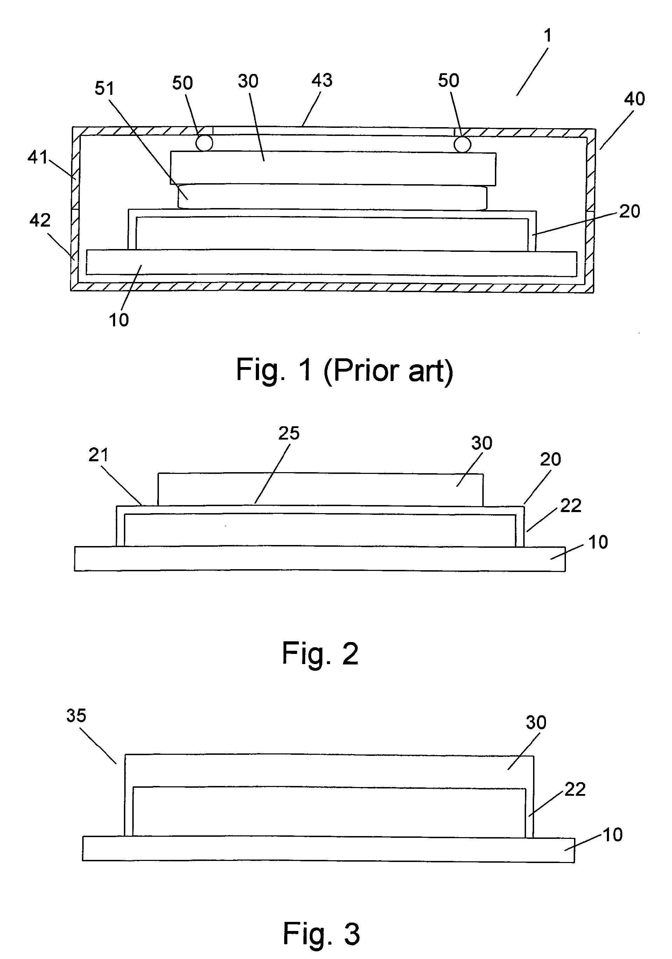

Referring firstly to fig. 1, an electronic equipment 1 with a prior art arrangement of a printed circuit board (PCB) 10, a shield box 20 and an LCD display 30 is shown. These components of the electronic equipment are usually contained within a cover 40 comprising e.g. a front cover part 41 and a back cover part 42. The PCB 10 can be attached to the back cover part 42. The front cover part 41 is provided with an aperture 43 through which the information displayed in the LCD display 30 can be observed. The prior art LCD display 30 can be attached to the rim of the aperture 43. Usually a flexible gasket 50 is placed between the rim of the aperture 43 and the rim of the LCD display 30, to protect the LCD display 30 from impacts provided to the electronic equipment, and to seal the aperture 43 from moisture, dust and dirt. Alternatively, the LCD display 30 can be secured in the electronic equipment by placing it held by abutment to the rim of the aperture 43 on the one side, and by abutment to the shield box to the other. If a space is provided between the back of the LCD display 30 and the shield box 20 the abutment between these parts can be obtained via insertion of a flexible pad 51.

The shield box 20 comprises a cover sheet 21 and walls 22 arranged perpendicularly to the cover sheet 21 to form a box. The cover sheet 21 and walls 22 are made from a material capable of conducting electric current. The walls are electrically connected to the PCB. The PCB is provided with electronic components (not shown) that need to be protected from electromagnetic fields. The shield box 20 covers the electrical components on the PCB 10, providing an electromagnetic interference (EMI) shield. Walls can also be arranged providing sections within the shield box, thus providing protection to specific electronic components on the PCB.

In a first embodiment of the invention the LCD display 30 is joined with the shield box 20 as illustrated in figure 2. The LCD display 30 and shield box 20 are distinct units, but connected to each other. This connection 25 can be provided by gluing of the LCD display 30 and the shield box 20 to each other.

In another embodiment the connection 25 can be provided by soldering of the LCD display 30 and the shield box 20 to each other.

In a further embodiment the connection 25 can be provided by taping of the LCD display 30 and the shield box 20 to each other using a double sided adhesive tape.

In the embodiment illustrated in fig. 3, the shield box 20 and the LCD display 30 are joined thereby forming an integrated unit 35. The walls 22 of the integrated unit 35 are formed on the back side of an LCD display. The back side of the LCD display 30 and the walls 22 are made by an electrically conducting material. The integrated LCD display 30 and walls 22 thus constitute a shield box 35.

The walls 22 are preferably formed at least along the periphery of the back side of the LCD display 30, and perpendicularly thereto. Walls can additionally be arranged to provide sections within the shield box, thus providing protection to specific electrical components on the PCB, and providing support and rigidity to the LCD display 30.

The conducting back side of the LCD display 30 and the walls 22 can be made by any suitable conductive material, e.g. a metal or a metal alloy.

In a further embodiment the walls can be formed from a silicone material containing electrically conducting particles. Thus the walls can easily be formed on existing types of LCD displays.

The considerations regarding the choice of material for the walls 22 apply to the embodiment illustrated in figure 2 as well.

## Claims

1. An electronic equipment (1) comprising an LCD display (30), a printed circuit board (PCB) (10) and a shield box (20), said shield box (20) comprising a conductive cover sheet (21) and conductive walls (22) connected to the conductive cover sheet (21), **characterized in that** the LCD display (30) and the shield box (20) are joined to form a single unit.

2. An electronic equipment (1) according to claim 1, **characterized in that** the LCD display (30) is glued to the cover sheet (21) of the shield box (20).

3. An electronic equipment (1) according to claim 1, **characterized in that** the LCD display (30) is soldered to the cover sheet (21) of the shield box (20).

4. An electronic equipment (1) according to claim 1, **characterized in that** the LCD display (30) is taped to the cover sheet (21) of the shield box (20) by use of a double-coated adhesive tape.

5. An electronic equipment (1) according to claim 1, **characterized in that** the shield box (20) is an integrated part (35) of the LCD display (30).

6. An electronic equipment (1) according to claim 5, **characterized in that** the cover sheet (21) is a metal plate provided on a back side of the LCD display (30), and that the walls (22) are connected thereto.

7. An electronic equipment (1) according to claim 6, **characterized in that** one or more of the walls (22) are formed of metal.

8. An electronic equipment (1) according to claim 6, **characterized in that** one or more of the walls (22) are formed of a silicone material containing electrically conducting particles.
